**Europäisches Patentamt**

**European Patent Office**

**Office européen des brevets**

(19)

(11) Publication number : **0 504 300 B1**

(12) # EUROPEAN PATENT SPECIFICATION

(45) Date of publication of patent specification :
23.08.95 Bulletin 95/34

(51) Int. Cl.⁶ : **G11B 7/095,** G11B 21/10,
G11B 7/013

(21) Application number : **91901766.5**

(22) Date of filing : **04.12.90**

(86) International application number :
**PCT/EP90/02099**

(87) International publication number :
**WO 91/08568 13.06.91 Gazette 91/13**

(54) **A TRACKING SYSTEM IN AN OPTICAL RECORDING/REPRODUCING DEVICE.**

(30) Priority : **04.12.89 JP 313326/89
04.12.89 JP 313327/89**

(43) Date of publication of application :
**23.09.92 Bulletin 92/39**

(45) Publication of the grant of the patent :
**23.08.95 Bulletin 95/34**

(84) Designated Contracting States :
**AT BE DE ES FR GB NL**

(56) References cited :
**EP-A- 0 210 330
EP-A- 0 246 919
GB-A- 2 158 611
GB-A- 2 196 115
US-A- 4 866 688
IEEE Transactions on Consumer Electronics,
Vol.35, No4,Nov.1989, p.810-812.**

(73) Proprietor : **DEUTSCHE THOMSON-BRANDT
GMBH
Hermann-Schwer-Strasse 3
D-78048 Villingen-Schwenningen (DE)**
Proprietor : **HITACHI, LTD.
New Marunouchi Building
Chiyoda-ku, Tokyo 100 (JP)**

(72) Inventor : **MORIMOTO, Yasuaki
4-103 Dai Nippon Ink, Sakura Shataku
1550-2 Rokusaki Sakurashi, CHIBA PREF (JP)**
Inventor : **YONEZAWA, Seiji, Dr.
HITACHI, LTD, New Marunouchi Bldg.,
5-1,Marunouchi
1-chome, Chiyoda-ku, Tokyo (JP)**

(74) Representative : **Einsel, Robert, Dipl.-Ing. et al
Deutsche Thomson-Brandt GmbH
Patent- und Lizenzabteilung
Göttinger Chaussee 76
D-30453 Hannover (DE)**

**EP 0 504 300 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 504 300 B1

## Description

The present invention related to an information recording/reproducing apparatus and method wherein information is recorded or reproduced while a tracking control is being performed.

It is know to employ a recording medium in which pregrooves along a track are provided so as to wobble minutely at a predetermined frequency and wherein information is recorded or reproduced while a tracking control is being performed by utilizing the pregrooves or pits, and an optical information recording/reproducing apparatus for write-once type and erasable type optical disk memories, etc. adopts the method.

It is further known to jointly employ pregrooves and track deviation correcting marks.

With the prior art the light spot cannot be precisely located on the center line on the track. This disadvantage will be overcome by the invention. A system and a method according to the present invention are defined in Claims 1 and 3. Further improvement is defined in the subclaim 2.

The prior art according to the preambles is known from US-A-4 866 688. Wobbling pits are provided in a discontinued region. IEEE Transaction on Consumer Electronics Vol. 35, No 4, p. 810-812 discloses an actuator moving the light at an oblique angle $\theta$, a push pull signal being generated according to the arithmetic equation

$$(A + C)(1 - G) + (B - D)(1 + G), G = \tan \theta \text{(Morimoto et al.)}$$

Fig. 1        is a diagram showing one embodiment of an optial information recording/reproducing apparatus according to the present inventions;

Fig. 2        is a diagram showing an example;

Fig. 3        shows a track structure of a disc medium;

Fig. 4        shows light beams on a bisectional detector (prior art);

Fig. 5        shows correlated values of the offset;

Fig. 6        shows a track structure;

Fig. 7        shows light beams on a quartered detector;

Fig. 8        shows the results of Fig. 7;

Fig. 9        shows a circuit of a servo system;

Fig. 10        shows another embodiment of the invention;

Fig. 11 - 13        show flow charts to Fig. 10;

Fig. 14        shows a frequently characteristic according the offset described according to Fig. 5;

Fig. 15        shows another embodiment of the servo system;

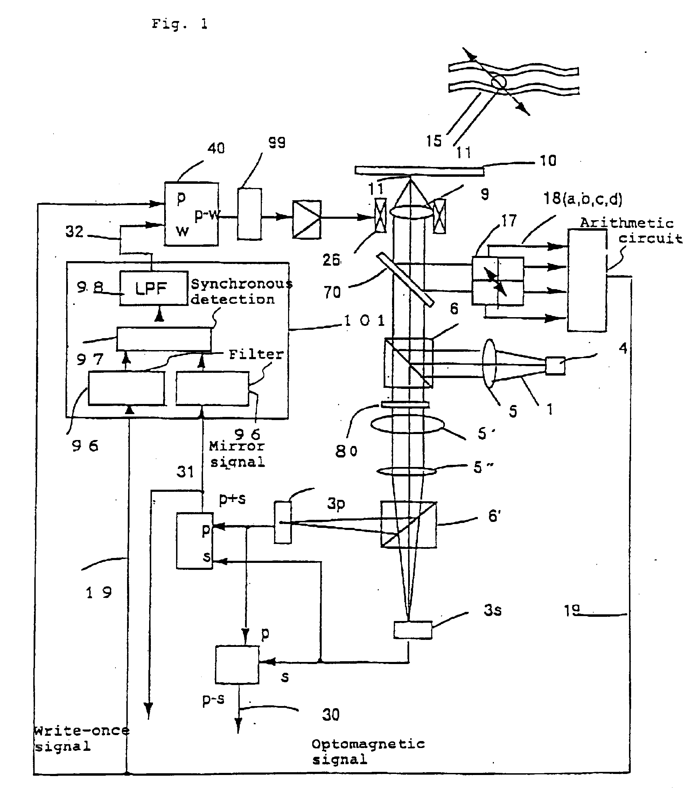

Fig. 1 shows an arrangement diagram of the optical system of two different optical recording/reproducing apparatus, i.e. two different embodiments of the present invention.

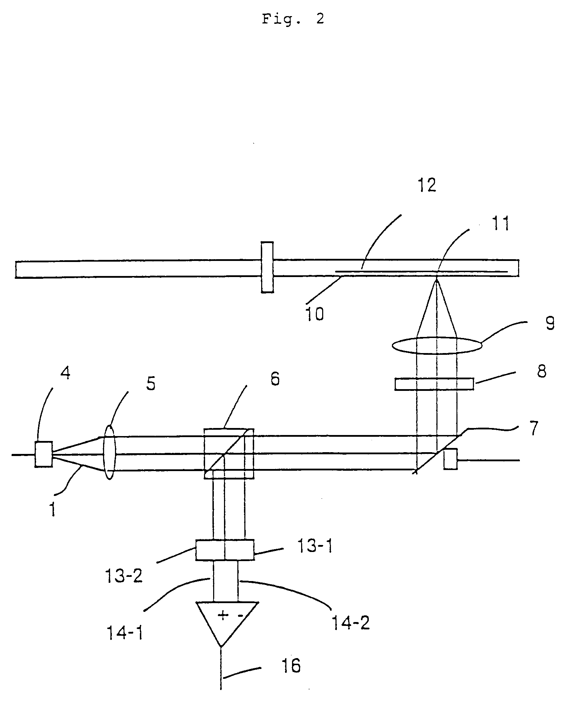

Details are described first with regard to Fig. 2 - 6 before Fig. 1 is explained in detail.

Fig. 2 is a diagram showing an example of construction of an optical system which serves to record and reproduce information on and from an optical disk. Referring to the figure, numeral 4 designated a semiconductor laser. A laser beam 1 radiated from the semiconductor laser 4 is propagated via a lens 5, a prism 6, a galvano-mirror 7 and a quarter-wave plate 8, and forms a light spot 11 on the recording surface of the disk 10 by means of an objective 9 so as to be projected on a concentric or spiral track 12 provided on the recording surface.

Thus, the lens 5, prism 6, galvano-mirror 7, quarterwave plate 8 and objective 9 construct the optical system by which the laser beam 1 radiated from the semiconductor laser 4 is projected as the light spot 11 on the recording surface of the disk 10. Reflected light from the recording surface of the disk 10 retrocedes to the above optical system again, and it is reflected by the prism 6 and then received by a bisectional photodetector 13 (13-1, 13-2), thereby to be converted into respective electric signals 14-1, 14-2. The difference signal of the electric signals becomes a push-pull tracking signal 16.

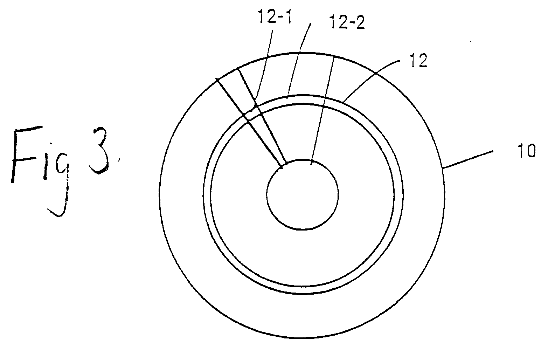

An example of the track structure of the disk medium which has heretofore been employed in such an optical disk apparatus, is illustrated in Fig. 3. As shown in Fig. 3, (A), the concentric or spiral track 12 is divided into 20 - 30 sectors per round, and each of the sectors is configured of a header part 12-1 and a data recording part 12-2. As shown in Fig. 3, (B), each header part 12-1 bears a track No., a sector No., a synchronizing signal, etc. which are formed of prepits at a depth approximately equal to a quarter wavelength. Each data recording part 12-2 is formed with pregrooves 15 at a depth approximately equal to a quarter wavelength, and data to be recorded is recorded on the land between the pregrooves 15 and along the center line of the land. Incidentally, the pregrooves 15 may well be formed so as to extend even in the header part 12-1 as depicted in Fig. 3, (B,C). The track structure divided into the sectors as illustrated in Fig. 3 is suitable for the recording of code data.

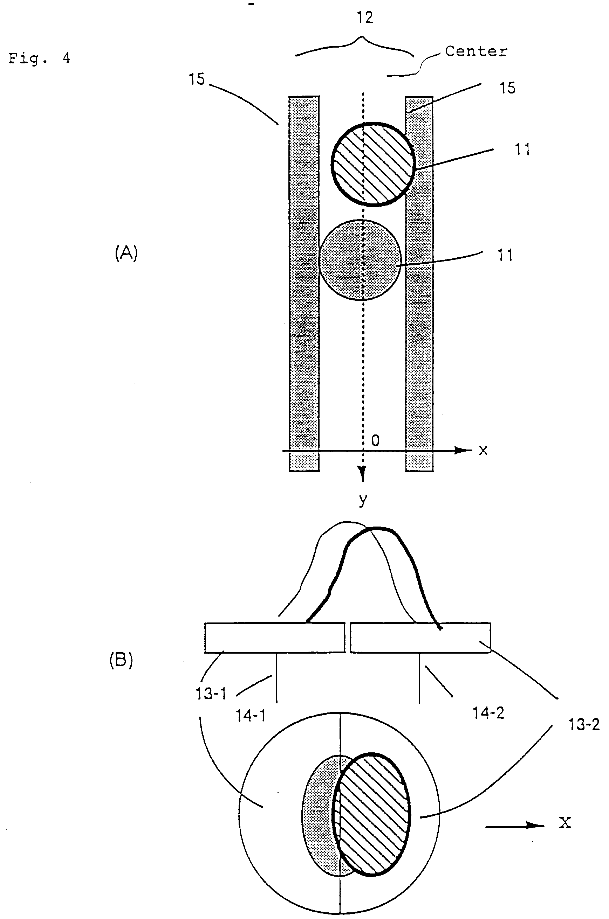

Fig. 4 shows light intensity distributions or light beams on the bisectional detector 13 (13-1, 13-2) in the cases where the light spot 11 projected on the track 12 agrees with the center line of the track 12 and deviates there-

2

from. When the light spot 11 deviates from the center line of the track 12, the intensity distributions of the reflected light from the disk become "push-pull". In the optical disk apparatus of this type, therefore, the tracking signal 16 is detected in such a way that, as illustrated in Figs. 2 and 4, the reflected light from the disk 10 is received by the two divisional photodetectors 13-1, 13-2 arranged in parallel with the track 12, whereupon the difference between the outputs 14-1, 14-2 of the respective photodetectors is taken. Such a tracking apparatus is disclosed in, for example, the official gazette of Japanese Patent Application Laid-open No. 60702/1974.

With the system for obtaining the push-pull tracking signal 16 as thus far stated; however, the light intensity distribution or light beam shifts in the radial direction of the disk (in an x-direction) on the bisectional photodetector 13 as illustrated in Fig. 4, (B) when the light spot 11 is moved radially of the disk by the galvano-mirror 7 in order to perform the tracking control (for example, in order to follow up an eccentric component of 30 Hz in a case where the disk 10 is rotated under an eccentricity of about 200 microns). The x-directional shift of the light intensity distribution on the photodetector results in changing the outputs 14-1, 14-2 of the detectors 13-1, 13-2, so that an offset develops in the difference signal 16.

By the way, the official gazette of Japanese Patent Application Laid-open No. 1111/1974, for example, discloses a tracking apparatus wherein,
with the intention of suppressing the tracking offset thus incurred when the light spot is moved radially of the disk by the galvano-mirror or the like in order to follow up the eccentrically rotating track, each header part of the track is provided with offset correction marks, for example, a pair of wobble pits which are approximately a quarter wavelength deep and which are arranged so as to be displaced on both the sides of the center line of the track, and the tracking offset which is ascribable to the movement of the galvano-mirror in the radial direction is suppressed by utilizing the marks.

[Problem to be Solved by the Invention]

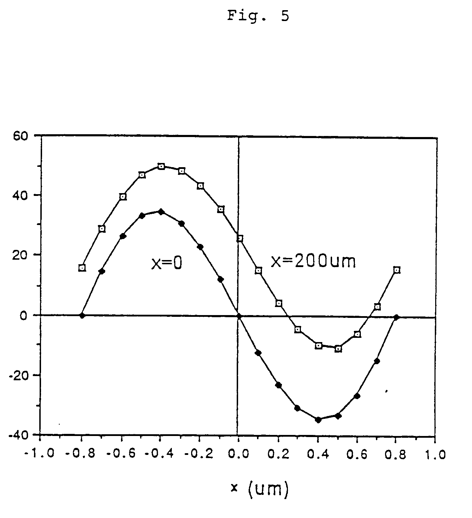

With the prior art, since about 20 sectors are usually included in one round of the track 12 by way of example, the header parts 12-1 are sampled at a rate of 20 x 30 = 600 Hz in rotating the disk at 30 Hz. Fig. 5 shows the calculated values of the offset of the push-pull tracking signal which is ascribable to the fact that the light intensity distribution is shifted in the x-direction on the photodetector by the movement of the galvano-mirror 7 or the like for the tracking control. As seen from Fig. 5, when the light spot is moved 200 microns on the disk by way of example, an offset of 0.3 micron arises. The error in a higher frequency region thus developed in the push-pull tracking signal is principally ascribable to the fact that the light spot is moved by the actuator in order to follow up the track of the disk of great eccentricity. Incidentally, even when the offset correction is made using the wobble marks stated before, a suppression ratio for the offset at the high frequency of 30 Hz is at most 1/2 theoretically. Accordingly, a residual offset of 0.3/2 = 0.15 micron remains. Further, in a case where the position of, for example, the bisectional detector 13 has deviated in the optical system shown in Fig. 2, the tracking signal does not become zero even when the light spot 11 lies on the center line of the track 12. Apart from such an offset ascribable to the movement of the tracking actuator, the drawback of the occurrence of a track offset takes place in a case where a secular change or adjustment dispersion is involved in the optical system. For these reasons, there arises the disadvantage that the light spot 11 cannot be precisely located on the center line of the track 12.

The present invention has been made in view of the above disadvantage, and has for its object to provide a method and an apparatus which relieve a higher-frequency offset to appear due to the shift of a light beam or intensity distribution on the face of a photodetector as attributed to the movement of a tracking actuator, for example, galvano-mirror or two-dimensional lens actuator and which further relieves a lower-frequency offset to appear due to the secular change, adjustment dispersion or the like of an optical system, thereby to record or reproduce information while performing a preciser tracking control.

The present invention for accomplishing the aforementioned object employs a recording medium in which pregrooves for guiding a light spot to-be-projected along a track are provided so as to wobble minutely at a predetermined frequency, constructing a tracking actuator so that the light spot to be projected on said recording medium may cross the pregrooves aslant, detecting a tracking signal with higher-frequency offset components reduced through a predetermined operation of output signals of a quadrantal detector which receives reflected light based on the light spot projected on said recording medium, further correcting the tracking signal on the basis of an error signal which is obtained in such a way that a signal corresponding to the reflected light from said recording medium is synchronously detected using said tracking signal as a reference synchronizing signal, and recording or reproducing information while said tracking actuator is being driven for a tracking control on the basis of the corrected tracking signal.

In the recording medium, the pregrooves wobbling minutely at a carrier frequency f0 of several tens kHz are provided beforehand in order to guide the light spot along the track. Track Nos., sector Nos., etc. subjected to the frequency modulation are recorded in the pregrooves. According to the present invention, in order to obtain the tracking signal which is free from the higher-frequency offset, the light spot is scanned on a recording surface by the tracking actuator in a direction which is not a direction perpendicular to the track (that is, which is not the radial direction of the disk), for example, it is scanned at an angle of about 45 degrees, the reflected light from the recording medium is received by the quadrantal photodetector, and the output signals of the quadrantal photodetector are processed so as to subtract the tracking offset ascribable to that shift of the light beam on the photodetector which is incurred by the movement of the tracking actuator. Further, the push-pull tracking signal from the wobbling pregrooves is corrected on the basis of the error signal which is obtained in the way that the reflection mirror signal corresponding to the total light quantity of the reflected light from the recording medium is synchronously detected using the push-pull signal as the reference synchronizing signal, thereby to reduce the lower-frequency tracking offset ascribable to the secular change, adjustment dispersion or the like of the optical system.

[Operations]

In this manner, for the purpose of obtaining the tracking signal which is free from the higher-frequency offset, the light spot is scanned on the recording surface in the direction differing from the direction perpendicular to the track (for example, the radial direction of the disk), that is, it is scanned in the direction in which the track is traversed aslant, by the tracking actuator which trackingly controls the eccentricity of the track, and the reflected light from the recording medium is received by the quadrantal photodetector, one of the dividing lines of which is arranged substantially in parallel with the track and the output signals of which are arithmetically processed, thereby to relieve the tracking offset ascribable to that shift of the light beam on the photodetector which is incurred by the movement of the tracking actuator. Further, the push-pull tracking signal is corrected on the basis of the error signal which is obtained in the way that the signal corresponding to the reflected light from the recording medium is synchronously detected using the push-pull tracking signal as the reference synchronizing signal, thereby to relieve the lower-frequency tracking offset ascribable to the secular change, adjustment dispersion or the like of the optical system. Therefore, the light spot can precisely follow up the center line of the track so as to record or reproduce data.

[Embodiments]

Now, embodiments of the present invention will be described with reference to the drawings.

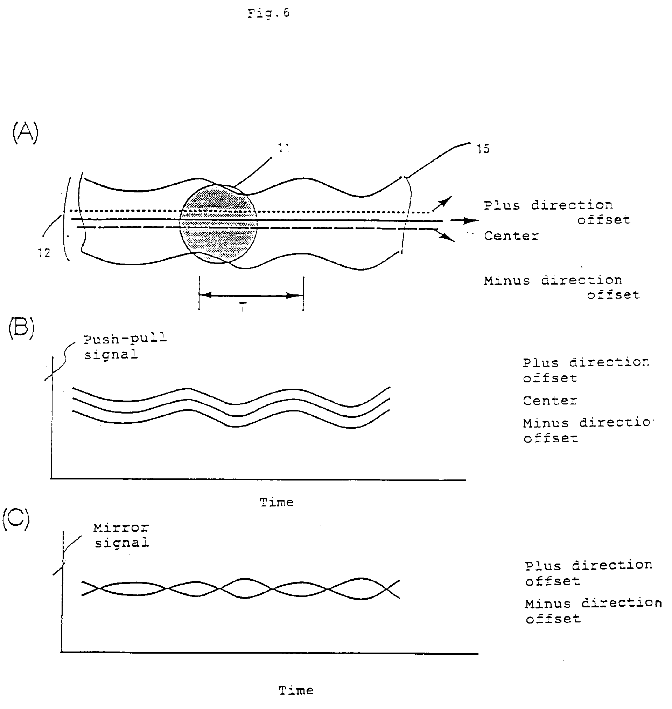

Fig. 6 shows an example of the track structure of a recording medium (for example, a write-once optical disk being writable, or an optomagnetic disk being recordable, reproducible and erasable) for use in the present invention, and the reproduced signals of the recording medium. Referring to Fig. 6, (A), a track 12 is formed with grooves 15 at a depth of about one-eighth wavelength on both the sides of the center line of the track by a replica in a manner to wobble minutely in the radial direction of the disk at a frequency of several tens kHz. Fig. 6, (B) and Fig. 6, (C) show a push-pull tracking signal which is produced when a light spot 11 scans the interspace between the pregrooves 15, and a mirror signal which corresponds to the total light quantity of reflected light from the recording medium, respectively. These signals will be described later. Data to be recorded is recorded along the center line between the pregrooves 15 and by utilizing the heat of the light spot 11.

Fig. 1 is a diagram showing one embodiment of an optical information recording/reproducing apparatus according to the present invention, and it illustrates an example of construction of an optical head in an optical disk apparatus which records and reproduces information on and from the optical disk which has the track structure shown in Fig. 6, (A). Referring to Fig. 1, light 1 radiated from a semiconductor laser 4 is propagated via a lens 5, a polarizing prism 6 and a semitransparent mirror 70, and it forms the light spot 11 on the recording surface of the disk 10 by means of an objective 9 which is driven by a two-dimensional lens actuator 26, the light spot being projected on the concentric or spiral wobbling track 12 which is provided on the recording surface. Thus, the semiconductor laser 4, lens 5, polarizing prism 6, semitransparent mirror 70 and objective 9 construct the projecting optical system by which the light 1 radiated from the semiconductor laser 4 is projected as the light spot 11 on the recording surface of the disk 10. Reflected light from the recording surface of the disk 10 retrocedes to the aforementioned projecting optical system again. Part of the reflected light is reflected by the semitransparent mirror 70, to be split from the projective light and to be received by four divisional photodetectors 17 (a, b, c, d), from which signals 18 (a, b, c, d) are respectively provided. Most of the remaining reflected light is rectilinearly propagated through the polarizing beam splitter 6, and via a half-wave plate 80, a condenser 5', and a cylindrical lens 5″ for detecting a defocusing signal, it is divided into two parts by the action of a polarizing prism 6', the two parts being respectively condensed on two photodetectors 3p and 3s which detect the polarization angles of the reflected light. The respective output signals of the P-light detector 3p and the S-light detector 3s are processed by a subtracter circuit, whereby an optomagnetic signal 30 can be obtained. On the other hand, the sum between the outputs of the P-light detector 3p and the S-light detector 3s is calculated by an adder circuit, whereby a brightness signal 31 indicating the intensity of the reflected light from the disk 10 can be obtained. The brightness signal 31 is used as information for detecting a tracking offset to be described later. Further, in the case where the disk 10 is the write-once disk, the signal 31 becomes the reproduced signal of additionally written data.

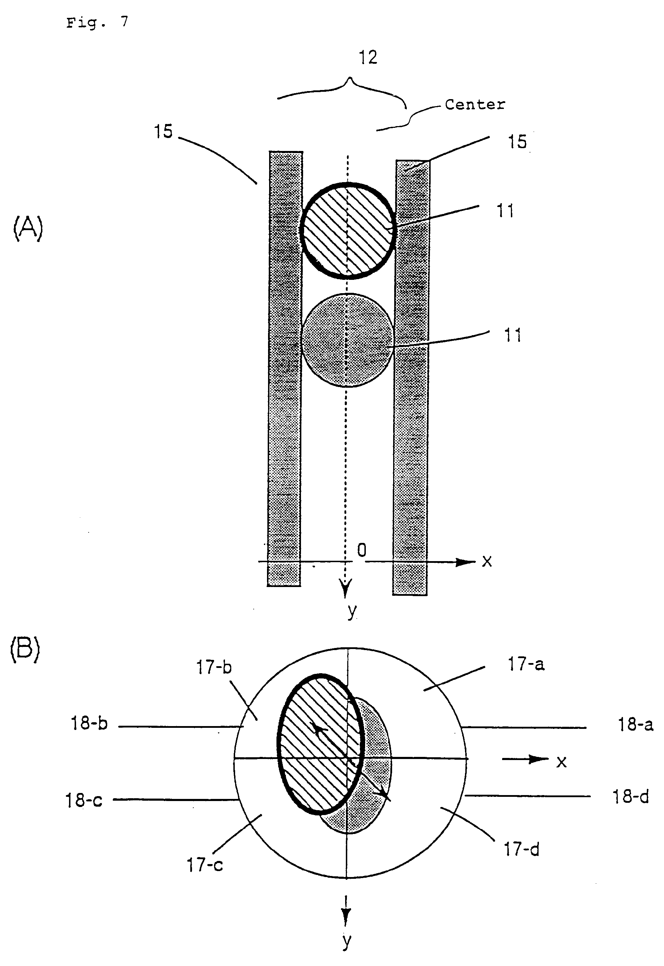

A tracking signal 19, which does not contain a higher-frequency offset, is obtained from the photoelectrically-converted signals 18 (a, b, c, d) of the quadrantal photodetector 17 (a, b, c, d). It will now be explained. Fig. 7 shows a light beam on the quadrantal photodetector 17 (a, b, c, d) in the case where the light spot 11 is projected on the recording surface of the disk 10 and where the tracking actuator (two-dimensional lens actuator 26) is driven in order that the light spot 11 may follow up the center line of the track 12 having an eccentricity of several hundred microns. The light beam on the photodetector 17 shifts due to, and in synchronism with, the movement of the tracking actuator (two-dimensional lens actuator 26). Referring to Fig. 7, there will be described a method of driving the tracking actuator, which method serves to prevent the push-pull tracking signal from containing the tracking offset even when the light beam is shifted on the photodetector 17 by the movement of the tracking actuator (two-dimensional lens actuator 26), and a method of detecting the push-pull tracking signal.

When the driving direction of the tracking actuator such as a galvano-mirror or the two-dimensional lens actuator is so set as to move the light spot in a direction orthogonal to the track (in an x-direction) in Fig. 7 as in the conventional manner, the light beam on the photodetector shifts in the same direction, namely, the x-direction, and hence, the tracking offset leaking into the push-pull tracking signal cannot be separated from this push-pull tracking signal. In order to separate the tracking offset ascribable to the shift of the light beam as leaks into the push-pull tracking signal, according to this embodiment, the driving direction of the tracking actuator such as two-dimensional lens actuator 26 or galvano-mirror is endowed with a certain angle so that the light spot 11 may traverse the track 12. That is, the light spot is moved, not only in the direction (x-direction) orthogonal to the track, but also in a direction (y-direction) parallel to the track. When the light spot is moved in this manner, the light beam also shifts aslant (in both the x-direction and the y-direction) on the photodetector. Thus, the tracking offset ascribable to the shift of the light beam appears only when the light beam shifts in the direction (x-direction) orthogonal to the track, and no offset appears even when the light beam shifts in the direction (y-direction) parallel to the track. This fact is exploited for separating the tracking offset ascribable to the shift of the light beam as leaks into the push-pull tracking signal. The photodetector 17 quartered (into a, b, c and d) by two divisional axes intersecting orthogonally is arranged so that one divisional axis may extend substantially in parallel with the track as illustrated in Fig. 7, and the output signals 18 (a, b, c and d) are arithmetically processed. A track offset component which is caused by the shift of the light beam when the light beam shifts in the direction (x-direction) orthogonal to the track, can be subtracted by a calculation based on the output signals 18 (a, b, c, d) which are generated when the light.beam shifts in the direction (y-direction) parallel to the track. The scanning direction of the light spot 11 by the tracking actuator is so set that an angle defined with a y-axis is, for example, Q degrees, whereby the light beam shifts aslant on the detecting surface of the photodetector. Then, using the output signals A, B, C and D from the respective photosensitive portions a, b, c and d of the quadrantal detector, the push-pull tracking signal PP is generally given by:

$$PP = (B - D)(1 - G) + (A - C)(1 + G) \quad (1)$$

where $G = \tan(Q)$

Here, the tracking actuator is driven by setting Q = 45 degrees, thereby to scan the light beam along the detector portions b and d. Then,

$$\text{owing to } G = \tan(45) = 1,$$
$$PP = 2(A - C) \quad (2)$$

holds. When, in this manner, the arithmetic processing is executed using the output signals 18a, b, c and d (A, B, C and D) from the four divisional photodetectors 17a, b, c and d as obtained when the light spot is moved aslant to the track, the push-pull tracking signal 19 having canceled the track offset ascribable to the shift of the light beam is attained.

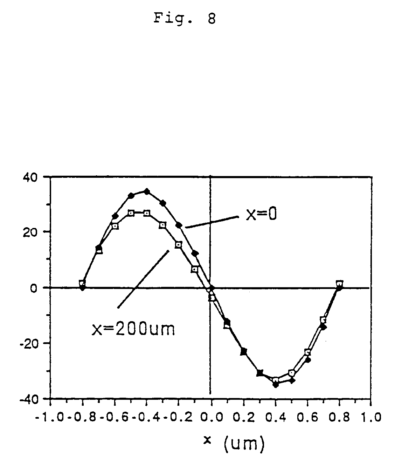

Fig. 8 shows the results of the push-pull tracking signal 19 evaluated with Eq. (2) from the output signals of the quadrantal photodetector in a case where the light spot is tracked and controlled with an inclination of about 45 degrees to the track when the disk 10 has an eccentricity of 200 microns. As seen from the results, according to this embodiment in which the light spot is not scanned perpendicularly to the track, but is scanned aslant thereto, and in which the outputs of the quadrantal photodetector are arithmetically processed, the track offset which is caused by the shift of the light beam attributed to the movement of the tracking actuator can be canceled even when the disk is eccentric as much as several hundred microns.

This embodiment cancels, not only the above-stated track offset incurred by the shift of the light beam attributed to the movement of the tracking actuator, but also lower-frequency offsets which are caused by the adjustment dispersion of the optical head, the inferior positioning of the photodetector 17, the nonuniform distribution of the semiconductor laser light, etc. To this end, the optical disk having the track structure of the wobbling pregrooves as shown in Fig. 6, (A) is employed in this embodiment. The aforementioned push-pull tracking signal, which is produced when the light spot 11 scans the track 15 in Fig. 6, (A), is illustrated in Fig. 6, (B), while the reflection mirror signal on that occasion is illustrated in Fig. 6, (C). The reflection mirror signal can be derived from the summation output of the quadrantal photodetector 17, or can alternatively be derived from the sum 31 (Fig. 1) between the outputs of the P-light detector 3p and the S-light detector 3s. When the spot 11 proceeds along the center line of the track or undergoes an offset in a plus direction or a minus direction, the waveform of the push-pull signal is inphase with the wobble grooves in Fig. 6, (A). In contrast, the mirror signal involves a phase shift in such a manner that its phase leads for the offset in the plus direction and lags conversely for the offset in the minus direction. Accordingly, when the mirror signal is synchronously detected using the push-pull signal as a synchronizing reference signal, the magnitude and direction of the deviation of the light spot from the center line of the track can be known. If an error signal produced by the synchronous detection is zero, the adjustment dispersion of the optical head is not involved. To the contrary, if the error signal has a certain value, the optical head is not satisfactorily adjusted, and its adjustment needs to be corrected.

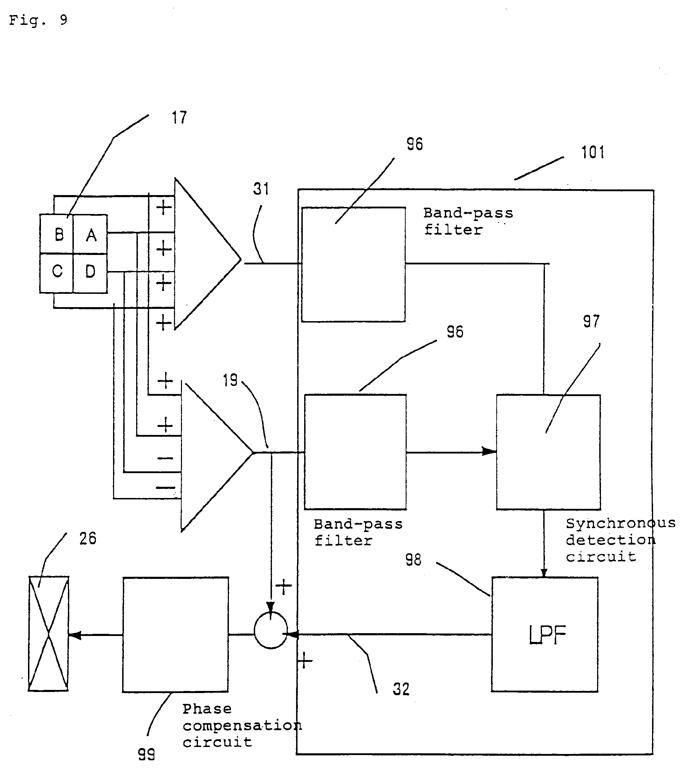

Now, Figs. 1 and 9 show an embodiment of a servo system according to the present invention for precisely realizing the tracking control by the use of the foregoing push-pull tracking signal 19 and the error signal produced by the synchronous detection. Referring to Figs. 1 and 9, the two signals of the push-pull signal 19 obtained from the output signals of the quadrantal detector and the mirror signal 31 (which is obtained from the sum between the outputs of the P-light detector 3p and the S-light detector. 3s in the illustration of Fig. 1) in the case where the light spot 11 has scanned the wobble pregrooves 15 aslant, are both input to an offset detection circuit 101 and have their components of the wobbling frequency respectively derived by narrow band-pass filters 96. Subsequently, using the push-pull signal as the synchronizing reference signal, the mirror signal is synchronously detected by a synchronous detection circuit 97. The resulting output is passed through a low-pass filter or integrator 98, whereby a track offset compensation signal 32 is produced. The track offset compensation signal 32 is added to the push-pull signal 19 by an offset correcting subtracter 40. Thereafter, the sum signal is supplied via a phase compensation circuit 99 and a power amplifier to the tracking actuator 26, thereby to perform the tracking operation. Regarding the push-pull signal 19, the track offset caused by the shift of the light beam attributed to the movement of the tracking actuator has been canceled as elucidated in conjunction with Figs. 7 and 8, and hence, the higher-frequency offset component of 30 Hz corresponding to the rotation of the disk has been sharply reduced. Accordingly, only DC offsets which develop due to the nonuniform intensity distribution of the semiconductor laser beam, the deviation of the optical system, etc. may be considered for the track offset compensation circuit 101 shown in Figs. 1 and 9. It is therefore possible to set the cutoff frequency of the band limiting filter 98 at several tens Hz which is much lower than in the prior art, and to suppress the DC offsets to 1/20 and to 1/10 even from the viewpoint of practical use. As a result, the stability of the servo system is enhanced, and the S/N ratio of information reproduction is also enhanced.

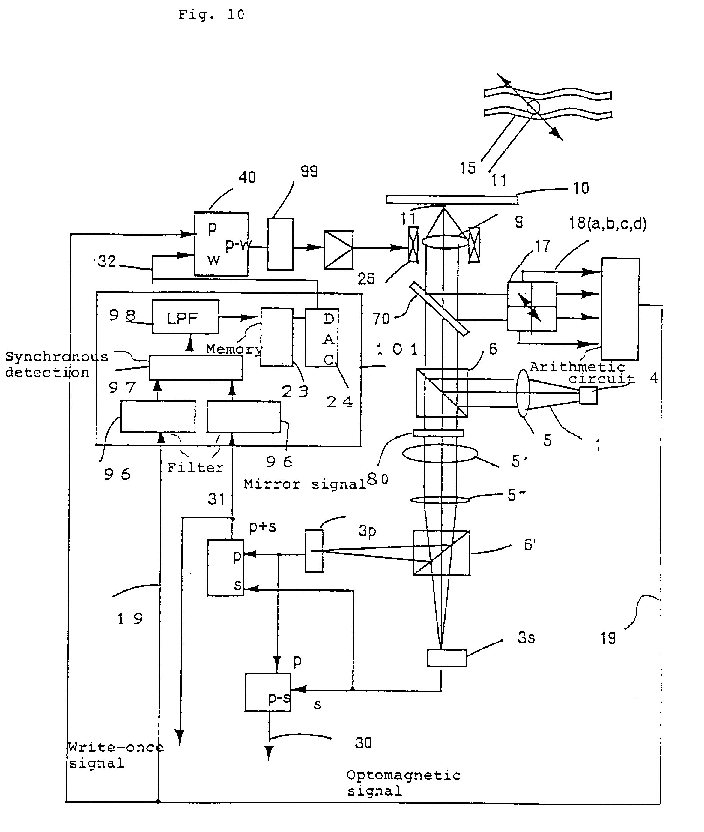

Fig. 10 is a diagram showing another embodiment of the present invention. In this embodiment, the optimum correction values for track deviations previously detected and obtained using the error signal (offset compensation signal 32) produced from the wobble grooves through the synchronous detection are stored in the form of unidimensional or two-dimensional information whose parameters are the size of the radius of the disk and the positions of the light spot on the disk, such as the rotational angles of the disk, and the push-pull servo system which employs the push-pull tracking signal containing no offset as detailed with reference to Fig. 1 is additionally provided with a feed-forward loop which employs the stored optimum correction values. Moreover, in order to cope with conspicuous fluctuations in the characteristics of the mechanical system and the optical system, the stored optimum correction values for track deviations as based on the error signal (offset compensation signal 32) produced from the wobble grooves or pits through the synchronous detection are updated by utilizing the idle time of the optical disk apparatus, and when the apparatus is operated, the feed-forward loop employing the stored optimum correction values updated is applied to the push-pull tracking system.

More specifically, referring to Fig. 10, the mirror signal 31 obtained as the summation output of the quadrantal photodetector 17 or as the sum output of the P-light detector 3p and S-light detector 3s and the push-pull tracking signal 19 obtained by arithmetically processing the outputs of the quadrantal photodetector 17 are both input to the offset detection circuit 101, and the offset compensation signal 32 is obtained as stated above. The offset compensation signal is stored in a memory 23 and is delivered to a D/A converter 24 as may be needed, whereby an analogized predictive correction signal 32 is derived. The predictive correction signal 32 is used in order that the push-pull tracking signal 19 obtained by arithmetically processing the outputs 18 (A, B, C, D) of the quadrantal photodetector 17 for the push-pull tracking error detection may be subjected to the offset correction by the offset correcting subtracter 40. Via the phase compensation circuit 99 as well as the power amplifier, the output of the subtracter 40 drives the tracking actuator 26, thereby to perform the tracking operation for the light spot 11.

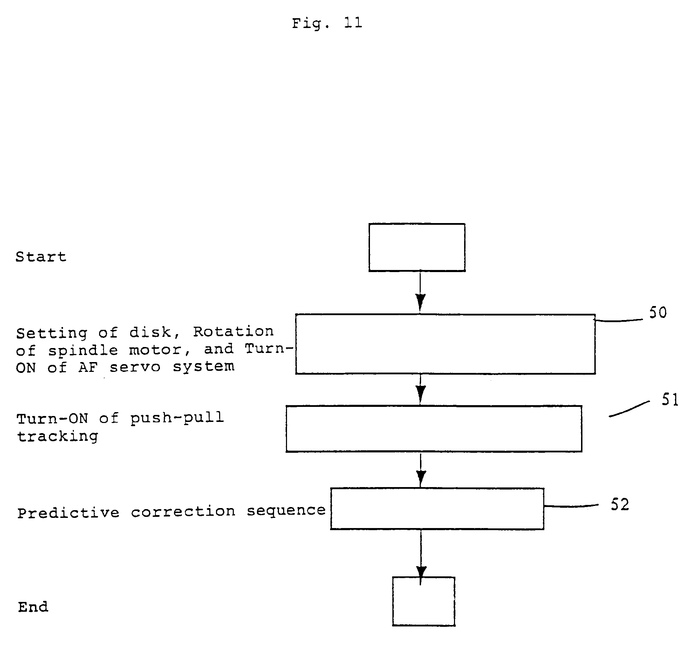

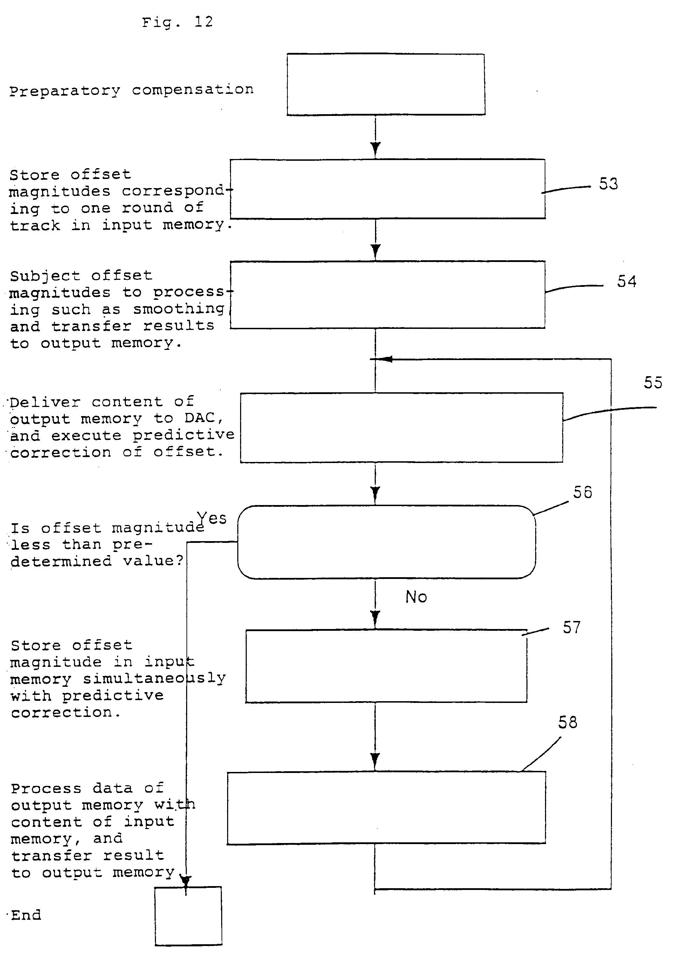

Fig. 11 is a flow chart showing an initializing operation at the setting of the disk in the embodiment of Fig. 10. First, the disk is set on the apparatus, a spindle motor is rotated at a predetermined rotational speed, and the light spot is focused (50 in the figure). Subsequently, the push-pull servo system is turned ON so as to establish a tentative tracking state (51 in the figure). At the next step, a predictive correction sequence is executed as indicated at 52 in the figure. The predictive correction sequence 52 is fundamentally the same as the operation explained in the description of Fig. 10, and the flow thereof is shown as a flow chart in Fig. 12 and will now be elucidated. First, under the tracking state based on only the push-pull tracking, the tracking offset compensation signal corresponding to one round of the track is measured using the offset detection circuit 101 and is stored in the input memory portion of the memory 23 (53 in the figure). Subsequently, the track offset compensation signal stored in the input memory portion is subjected to noise removal processing, data interpolation processing (smoothing), phase shift processing, etc., and the results are stored in an output memory portion (54 in the figure). Thereafter, the contents of the output memory portion are successively delivered to the D/A converter in accordance with the positions of the light spot on the disk, thereby to execute the operations of correcting track deviations (55 in the figure). While the predictive correction is being performed in this manner, the detected error signal (offset compensation signal) is monitored, to decide if the error signal is less than a predetermined value. If so, the flow gets out of the sequence (56 in the figure), and the predictive correction operation is thereafter continued using the stored correction value. In contrast, when the detected error signal (offset compensation signal) has been decided to reach or exceed the predetermined value in the decision state (56 in the figure), the flow traces a loop along which the data of the output memory portion calculated before and used for the correction operation is subjected to correction processing simultaneously with the execution of the predictive correction operation, by the use of the track deviation magnitudes (57 in the figure) of one round of the track kept stored in the input memory portion, the processed result is stored in the output memory portion again (58 in the figure), and this step 58 is followed by the state 55 in the figure. According to the above embodiment, the track deviations which are caused by an inclination, a deformation, an eccentricity, electrical and mechanical fluctuations, etc. at the setting of the disk can be readily corrected, and excellent tracking controls can be realized coping with frequency characteristics (response characteristics) in a seek operation etc.

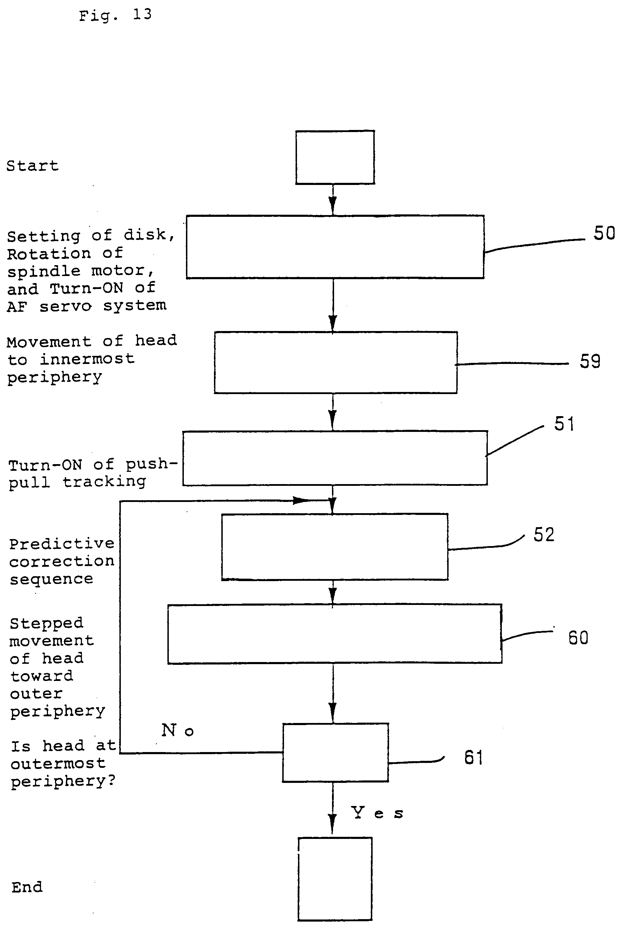

Still another improvement according to the present i-nvention will be described with reference to Fig. 13. The circuit arrangement of the embodiment is the same as in Fig. 10. The embodiment is identical till the stage at which the disk is set and then the light spot is focused (50 in Fig. 13). After the optical head is moved to the innermost periphery of the disk (59 in Fig. 13), the tracking control is turned ON (51 in Fig. 13). Thereafter, the predictive correction sequence is started (52 in Fig. 13). When correction data corresponding to one track has been acquired, the optical head is steppedly moved toward the outer periphery of the disk (60 in Fig. 13), and at the radial position of the disk, the predictive correction sequence is executed to acquire correction data again. Such operations are repeatedly carried out. Thereafter, when the optical head is decided to have reached the outermost periphery (61 in Fig. 13), the initializing operation is ended. Thenceforth, the predictive corrections for the track deviations are made by reading out the data of the memory 23 in accordance with the radial positions and rotational angles of the disk at which the light spot lies.

According to this embodiment, even for the disk 10 which has been deformed arcuately or irregularly, the track deviations can be readily corrected, and excellent tracking controls can be realized coping with frequency characteristics (response characteristics) in a seek operation etc.

According to the present invention, it is possible to relieve a tracking offset which is caused by the shift of a light beam on a photodetector attributed to the movement of a tracking actuator, and further to relieve lower-frequency tracking offsets which are caused by the secular change, adjustment dispersion, etc. of an optical system, so that a light spot can precisely follow up the center line of a track to record or reproduce data. Moreover, track offsets which develop in a push-pull servo system can be reliably and predictively corrected using track deviation correction magnitudesobtained from wrobble tacks by synchronous detection and stores in advance, so that a tracking servo system which is excellent in response characteristics and a tracking accuracy can be constructed.

An example of the track structure of the disk medium which has hereto been employed in such an optical disk apparatus, is illustrated in Fig. 3. As shown in Fig. 3, (A), the concentric or spiral track 12 is divided into 20 - 30 sectors per round, and each of the sectors is configured of a header part 12-1 and a data recording part 12-2.

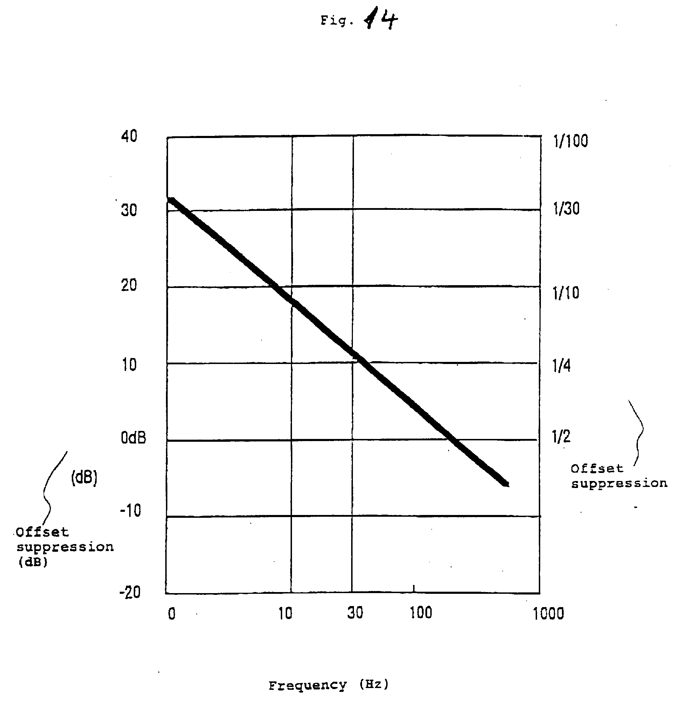

As seen from Fig. 5, when the light spot is moved 200 microns on the disk by way of example, an offset of 0.3 micron arises. Further, Fig. 14 shows frequency characteristics theoretically calculated as regards the extents to which the offset can be suppressed by the wobble mark pairs numbering 20 per round of the track. The axis of abscissas represents the offset frequency, while the axis of ordinates represents the magnitude of track offset suppression. It is understood from Fig. 6 that the effect of the offset suppression decreases as the frequency heightens. Assuming the sampling frequency of the wobble marks to be $F_s = 600$ Hz, theoretically quite no effect is produced for $F_s/5 = 120$ Hz or above.

The error in a higher frequency region developed in the push-pull tracking signal is principally ascribable to the fact that the light spot is moved in order to follow up the track of the disk of great eccentricity. By way of example, the magnitude of suppression at 30 Hz corresponding to the rotational frequency of the disk is limited to 1/4 as seen from Fig. 6. In practical use, considering the dispersion of the grooves, etc., the magnitude of suppression is limited to 1/2. Accordingly, in a case where the light spot is moved on the disk under the conditions of, for example, the frequency of 30 Hz and the amplitude of 200 microns in order to follow up the track, the track offset which is incurred by the shift of the light beam on the detectors 13-1 and 13-2 is 0.3 micron in view of Fig. 5. Even when this offset is corrected using the wobble marks 2 (2-1, 2-2), a residual offset of 0.3/2 = 0.15 micron remains. As a result, the light spot 11 fails to follow up the center line of the track 12. When the light beam shifts on the detectors 13 (13-1, 13-2) as described above, the outputs 14-1 and 14-2 from the two divisional detectors 13 (13-1, 13-2) arranged in parallel with the track 12 become unbalanced, to give rise to the phenomenon in which the tracking signal does not become zero even when the light spot 11 lies on the center line of the track 12, and which is the track offset. This phenomenon depends upon the frequency, and is incurred even by a D.C. component, for example, the inferior adjustment of the position of the photodetector 13. However, particularly components of higher frequencies, for example, offset components at and above 30 Hz corresponding to the rotational frequency of the disk cannot be suppressed, so that offsets are left behind. For these reasons, there arises the disadvantage that the light spot 11 cannot be precisely located on the center line of the track 12.

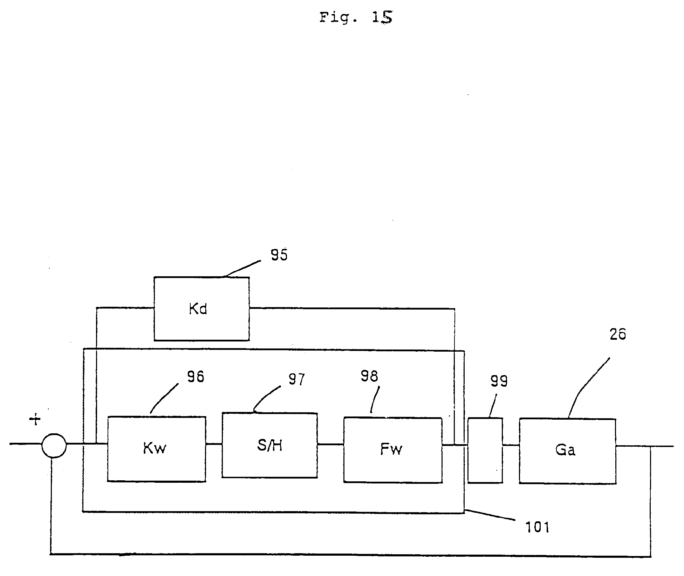

Now, Figs. 1 and 15 show an embodiment of a servo system according to the present invention for precisely realizing the tracking control by the use of the foregoing push-pull tracking signal 19 and the error signal detected from the track deviation correcting mark. Referring to Figs. 1 and 10, the servo System is configured of a track deviation detecting element (Kg) 95 construted of the arithmetic circuit in Fig. 1 for detecting the push-pull tracking signal 19 in which the track offset caused by the shift of the light beam attributed to the movement of the tracking actuator 26 has been cancelled, a detection element (Kw) 96 for detecting the error signal from the track deviation correcting mark, a sample-and-hold circuit (S/H) 97, a band limiting filter (Fw) 98, a phase compensation circuit 99, and the tracking actuator (Ga) 26. In Fig. 15, regarding the push-pull signal 19, the track offset caused by the shift of the light beam attributed to the movement of the tracking actuator has been cancelled as elucidated in conjunction with Figs. 7 and 8, and hence, the higher-frequency offset component of 30 Hz corresponding to the rotation of the disk has been sharply reduced. Accordingly, only DC offsets which develop due to the nonuniform intensity distribution of the semiconductor laser beam, the deviation of the optical system, etc. may be considered for the track offset compensation circuit 101 shown in Figs. 1 and 10. It is therefore possible to set the cutoff frequency of the band limiting filter (Fw) 98 at several tens Hz which is much lower than in the prior art, and to suppress the DC offsets to 1/20 and to 1/10 even from the viewpoint of practical use. Here, the correction signal 32 is used in order that the push-pull tracking signal 19 obtained by arithmetically processing the outputs 18 (A, B, C, D) of the quadrantal photodetector 17 for the push-pull tracking error detection may be subjected to the offset correction by the offset correcting subtractor 40. Via the phase compensation circuit 99 as well as the power amplifier, the output of the subtractor 40 drives the tracking actuator 26, thereby to perform the tracking operation for the light spot 11. As a result, the stability of the servo system is enhanced, and the S/N ratio of information reproduction is also enhanced.

## Claims

1.  A tracking system comprising a recording medium having pregrooves defining tracks, optical scanning means including a light source (4), light detector and a tracking actuator (2b), the system further comprising first tracking error signal generating means for receiving signals from said light detector and for generating a push-pull signal (19) in response to the difference of detector output signals, a second signal generating means generating a wobbled mirror signal (31) which indicates the intensity of the light from the recording medium and means (101) for synchronously processing the signal to generate a low frequency track offset correction signal and means (40) for correcting said push-pull signal by said track offset correction signal to produce a tracking signal to be supplied to said tracking actuator,
    **characterized in that** continuous pregrooves (15) are wobbling in radial direction at a predetermined frequency, track actuator means (26) move the light beam at an oblique angle Q across said pregroove, the error signal generating means are for generating a high frequency push-pull signal (PP) according to the arithmetic equation PP = (B - D) (1 - G) + (A - C) (1 + G) whereby G tan (Q), the detector outputting signals (A, B, C, D) generated from elements (a, b, c, d) of a four-quadrant light detector, elements (a) and (b) being respectively disposed diagonally to the elements (c) and (d), synchronously processing is made by comparing a phase of said push-pull signal and a phase of said mirror signal.

2. The system according to claim 1 further including means for storing said correction signal.

3. Method for following a track in a system comprising a recording medium having pregrooves defining tracks, optical scanning means including a light source, light detector and a tracking actuator, first tracking error signal for generating means (20) for receiving signals from said light detector and generating a push-pull signal (23) in response to the difference of detector output signals, a second signal generating means (30) generating a wobbled mirror signal (37) which indicates the intensity of the light from the recording medium and means for synchronously processing the signal to generate a low frequency track offset correction signal and means for correcting said push-pull signal by said track offset correction signal to produce a tracking signal to be supplied to said tracking actuator the method being characterised in that the continuous pregrooves (15) are wobbling in radial direction at a predetermined frequency, track actuator means (26) move the light beam at an oblique angle Q across said pregroove, a high frequency push-pull signal (PP) is generated according to the arithmetic equation PP = (B - D) (1 - G) + (A - C) (1 + G) whereby G = tan (Q), the detector outputting signals (A, B, C, D) generated from elements (a, b, c, d) of a four-quadrant light detector, elements (a) and (b) being respectively disposed diagonally to the elements (c) and (d), and synchronously processing is made by comparing a phase of said push-pull signal and a phase of said mirror signal.

## Patentansprüche

1. Spursteuersystem umfassend: ein Aufzeichnungsmedium mit Spuren definierenden Vorrillen, optische Abtastmittel mit einer Lichtquelle (4), einem Lichtdetektor und einer Spursteuerbetätigungsvorrichtung (26), erste ein Spursteuer-Fehlersignal erzeugende Mittel zum Empfang von Signalen von dem Lichtdetektor und zum Erzeugen eines Gegentakt-Signals (11) in Abhängigkeit von der Differenz von Detektor-Ausgangssignalen, zweite signalerzeugende Mittel, die ein gewobbeltes Spiegelsignal (31) erzeugen, das die Intensität des Lichts von dem Aufzeichnungsmedium anzeigt, und Mittel (101) zur synchronen Verarbeitung des Signals, um ein niederfrequentes Spurversatz-Korrektursignal zu erzeugen, und Mittel (40) zur Korrektur des Gegentakt-Signals durch das Spurversatz-Korrektursignal, um ein Spursteuersignal für die Zuführung zu der Spursteuerbetätigungsvorrichtung zu erzeugen, dadurch gekennzeichnet, daß kontinuierliche Vorrillen (15) in radialer Richtung mit einer vorgegebenen Frequenz wobbeln, daß die Spursteuerbetätigungsmittel (26) den Lichtstrahl unter einem spitzen Winkel Q über die Vorrille bewegen, daß die das Fehlersignal erzeugenden Mittel zur Erzeugung eines hochfrequenten Gegentakt-Signals (PP) gemäß der arithmetischen Gleichung PP = (B - D) (1 - G) + (A - C) (1 + G) dienen, wobei G = tan (Q) ist, daß die Detektor-Ausgangssignale (A, B, C, D) von Elementen (a, b, c, d) eines Vier-Quadrant-Lichtdetektors erzeugt werden, daß die Elemente (a) und (b) jeweils diagonal zu den Elementen (c und d) angeordnet sind, daß die synchrone Verarbeitung durch Vergleich einer Phase des Gegentakt-Signals und einer Phase des Spiegelsignals erfolgt.

2. System nach Anspruch 1, das ferner Mittel zum Speichern des Korrektursignals enthält.

3. Verfahren zum Verfolgen einer Spur in einem System umfassend: ein Aufzeichnungsmedium mit Spuren definierenden Vorrillen, optische Abtastmittel mit einer Lichtquelle, einem Lichtdetektor und einer Spursteuerbetätigungsvorrichtung, erste ein Spursteuer-Fehlersignal erzeugende Mittel (20) zum Empfangen von Signalen von dem Lichtdetektor und zum Erzeugen eines Gegentakt-Signals in Abhängigkeit von der Differenz von Detektor-Ausgangssignalen, zweite signalerzeugende Mittel (30), die ein gewobbeltes Spiegelsignal (37) erzeugen, das die Intensität des Lichts von dem Aufzeichnungsmedium anzeigt, und Mittel zur synchronen Verarbeitung des Signals, um ein niederfrequentes Spursteuerversatz-Korrektursignal zu erzeugen, und Mittel zur Korrektur des Gegentakt-Signals durch das Spursteuerversatz-Korrektursignal, um ein Spursteuersignal für die Zuführung zu der Spursteuerbetätigungsvorrichtung zu erzeugen, dadurch gekennzeichnet, daß die kontinuierlichen Vorrillen (15) in radialer Richtung mit einer vorgegebenen Frequenz wobbeln, daß die Spursteuerbetätigungsmittel (26) den Lichtstrahl unter einem spitzen Winkel (Q) über die Vorrille bewegen, daß ein hochfrequentes Gegentakt-Signal gemäß der arithmetischen Gleichung PP = (B - D) (1 - G) + (A - C) ( 1 + G) erzeugt wird, wobei G = tan (Q) ist, daß die Detektor-Ausgangssignale (A, B, C, D) von Elementen (a, b, c, d) eines Vier-Quadrant-Lichtdetektors erzeugt werden, wobei die Elemente (a) und (b) jeweils diagonal zu den Elementen (c) und (d) angeordnet sind, und daß die synchrone Verarbeitung durch Vergleich einer Phase des Gegentakt-Signals mit einer Phase des Spiegelsignals erfolgt.

**Revendications**

1.  Système de poursuite de piste comprenant un support d'enregistrement sur lequel sont formées des rainures (15) définissant des pistes, des moyens de balayage optique comprenant une source lumineuse (4), un détecteur de lumière (17) et un dispositif de commande de poursuite de piste (26), le système comprenant également des premiers moyens de génération d'un signal d'écart de poursuite qui reçoivent des signaux dudit détecteur de lumière et génèrent un signal push-pull (19) en fonction de la différence entre les signaux de sortie dudit détecteur de lumière, et des seconds moyens de génération de signaux qui génèrent un signal de miroir ondulé (31) qui indique l'intensité de lumière réfléchie dudit support d'enregistrement, et des moyens (101) de traitement synchrone de ce signal permettant de générer un signal basse fréquence de correction d'écart de poursuite de piste, et des moyens (40) pour appliquer ce signal de correction d'écart audit push-pull signal afin de produire un signal de poursuite de piste à fournir audit dispositif de commande de poursuite de piste,

    caractérisé en ce que lesdites rainures forment des ondulations dans une direction radiale à une fréquence prédéterminée, ledit dispositif de commande de poursuite de piste balaye le faisceau de lumière à un angle oblique Q à travers lesdites rainures, lesdits moyens de génération d'un signal d'écart de poursuite génèrent un signal push-pull haute fréquence PP selon la relation:
    $$PP = (B - D)(1 - G) + (A - C)(1 + G), \text{ avec } G = \tan(Q),$$
    A, B, C et D étant les signaux générés à partir des quatre secteurs a, b, c et d d'un détecteur quadrisectionnel, les secteurs a et b étant respectivement placés diagonalement par rapport aux secteurs c et d, ledit traitement synchrone étant effectué en comparant la phase dudit signal push-pull et celle dudit signal de miroir.

2.  Système de poursuite de piste selon la revendication 1, comprenant également des moyens de stockage dudit signal de correction d'écart de poursuite de piste.

3.  Méthode de poursuite de piste comprenant un support d'enregistrement sur lequel sont formés des rainures définissant des pistes, des moyens de balayage optique comprenant une source lumineuse, un détecteur de lumière et un dispositif de commande de poursuite de piste, des premiers moyens de génération d'un signal d'écart de poursuite (20) qui reçoivent des signaux dudit détecteur de lumière et génèrent un signal push-pull (23) en fonction de la différence entre les signaux de sortie dudit détecteur de lumière, et des second moyens de génération de signaux (30) qui génèrent un signal de miroir ondulé (37) indiquant l'intensité de lumière réfléchie dudit support d'enregistrement, et des moyens de traitement synchrone de ce signal permettant de générer un signal basse fréquence de correction d'écart de poursuite de piste, et des moyens pour appliquer ce signal de correction d'écart audit push-pull signal afin de produire un signal de poursuite de piste à fournir audit dispositif de commande de poursuite de piste,

    caractérisé en ce que lesdites rainures forment des ondulations dans une direction radiale à une fréquence prédéterminée, ledit dispositif de commande de poursuite de piste balaye le faisceau de lumière à un angle oblique Q à travers lesdites rainures, lesdits moyens de génération d'un signal d'écart de poursuite génèrent un signal push-pull haute fréquence PP selon la relation:
    $$PP = (B - D)(1 - G) + (A - C)(1 + G), \text{ avec } G = \tan(Q),$$
    A, B, C et D étant les signaux générés à partir des quatre secteurs a, b, c et d d'un détecteur quadrisectionnel, les secteurs a et b étant respectivement placés diagonalement par rapport aux secteurs c et d, ledit traitement synchrone étant effectué en comparant la phase dudit signal push-pull et celle dudit signal de miroir.

Fig. 1

40  99

p
p-w
w

32

15  11

10

11  9  18(a,b,c,d)

Arithmetic
circuit

26

17

9.8  LPF  Synchronous
detection

101

70

6

97  Filter

96

5

96  Mirror
signal

80  5'

5"

31  p+s

3p  6'

p

s

19  3s  19

p

s

p-s  30

Write-once
signal

Optomagnetic
signal

Fig. 2

Fig 3

12-1    12-2    12    10

Fig. 4

12

Center

15

15

11

11

(A)

0

x

y

(B)

13-1

14-1

14-2

13-2

x

Fig. 5

x (um)

Fig.6

(A)

Plus direction
      offset

Center

Minus direction
       offset

(B)

Push-pull
signal

Plus direction
offset

Center

Minus directio
offset

Time

(C)

Mirror
signal

Plus direction
offset

Minus direction
offset

Time

Fig. 7

(A)

12

Center

15

15

11

11

0

x

y

(B)

17-b

17-a

18-b

18-a

x

18-c

18-d

17-c

17-d

y

17

Fig. 8

Fig. 9

Fig. 10

Fig. 11

Start

Setting of disk, Rotation
of spindle motor, and Turn-
ON of AF servo system

50

Turn-ON of push-pull
tracking

51

Predictive correction sequence

52

End

Fig. 12

Preparatory compensation

Store offset
magnitudes correspond-
ing to one round of
track in input memory.                                       — 53

Subject offset
magnitudes to process-
ing such as smoothing
and transfer results                                          — 54
to output memory.

                                                                        55

Deliver content of
output memory to DAC,
and execute predictive
correction of offset.                                         — 55

                                                              56
Is offset magnitude Yes
less than pre-
determined value?

                                              No

                                                              — 57
Store offset
magnitude in input
memory simultaneously
with predictive
correction.

                                                              58

Process data of
output memory with
content of input
memory, and
transfer result
to output memory.

End

Fig. 13

Start

Setting of disk,
Rotation of
spindle motor,
and Turn-ON of
AF servo system

50

Movement of head
to innermost
periphery

59

Turn-ON of push-
pull tracking

51

Predictive
correction
sequence

52

Stepped
movement
of head
toward
outer
periphery

60

Is head at
outermost
periphery?

No

61

Yes

End

Fig. 14

Frequency (Hz)

Fig. 15